# EUROPEAN PATENT APPLICATION

(11) **EP 1 598 401 A1**
(43) Date of publication of application: **23.11.2005**
(21) Application number: 05010581.6
(22) Date of filing: 17.05.2005
(51) Int. Cl.: C08L 83/04, A23G 1/22, A23G 3/02, A23G 3/00

(54) **Flexible food grade silicone elastomer-based mold, method of making a flexible food grade mold and use of silicone elastomers resulting from a platinum-catalyzed cross-linking process with further PTFE addition for making flexible food grade molds**

(30) Priority: 18.05.2004 IT MI20040988
(71) Applicant: Pavoni Italia S.p.a., 24040 Suisio (BG) (IT)
(72) Inventor: Perrone, Cosimo, 24040 Suisio (BG) (IT)
(74) Representative: Premru, Rok

(57) **Abstract**

The present invention relates to a flexible food grade silicone elastomer-based mold of the type that is obtained by a platinum-catalyzed cross-linking process, characterized in that it comprises a PTFE filler and a method of making a flexible silicone elastomer-based food grade mold, comprising the steps of providing a liquid silicone mixture, which contains a platinum-based catalyst and has PTFE added thereto, molding said mixture, carrying out a cross-linking process at a temperature of 150°C to 190°C for 20 seconds to 120 seconds.

## Description

This invention relates to a flexible food grade silicone elastomer-based mold, adapted for cooking and/or cooling food products (cakes, ice-creams, puddings, etc.).

This patent further relates to a method for making a flexible food grade mold, as well as the use of silicone elastomers resulting from a platinum-catalyzed cross-linking process with further PTFE addition for making flexible molds.

Silicone elastomers preserve their mechanical properties over a wide range of temperatures (about -40°C to +250°C), ad exhibit high flame resistance, low moisture absorption and good heat conductivity.

Thanks to all these properties silicone elastomers are particularly useful in many applications.

In gastronomy, it is known to use flexible silicone elastomer-based molds, preferably with the addition of pigments or additives to improve certain properties of the material.

In short, these molds are fabricated by molding a liquid silicone elastomer-based mixture and subsequently cross-linking it, to provide the product with adequate elastic properties.

The cross-linking process is carried out by adding appropriate catalysts to the elastomer mixture.

Some of these catalysts generate toxic and/or malodorous residues, hence they are not suitable for food applications.

Patent EP-B1-0 992 195 granted to LEUKE S.A. teaches the use of platinum as a catalyst in food grade silicone cross-linking processes.

Platinum is a particularly advantageous catalyst, as it is non-toxic and prevents the generation of nasty smells.

Nevertheless, prior art silicone elastomer-based molds still have a few drawbacks.

Particularly, problems are encountered in release and removal of some flour-based food products after cooking.

Also, prior art silicone elastomer-based molds are not pleasant to the touch.

The object of this invention is to obviate at least some of prior art drawbacks and particularly the drawback set out hereinbefore.

This object is fulfilled by a flexible silicone-based mold according to the principle of claim 1, by a method according to claim 4 and by a use according to claim 5.

Further advantages may be achieved by the additional features of the dependent claims.

An embodiment of a mold according to the invention will be now described.

A liquid silicone mixture is provided, which contains a platinum-based catalyst.

The mixture may also include pigments.

The feature of the invention is that PTFE (polytetrafluoroethylene) is added to the mixture.

Preferably, the mixture has a density of 1.15 to 1.19 g/cm³.

The amount of PTFE is preferably 0.2% to 2% by weight; still more preferably the amount of PTFE is of 0.3% to 0.6% by weight.

This mixture is molded in a well-known manner to make a food grade mold.

Cross-linking is then carried out at a temperature of 150°C to 190°C for 20 seconds to 120 seconds depending on the thickness of the product.

After cross-linking, silicone has a Shore A of 55 to 65.

## Claims

1. A flexible food grade silicone elastomer-based mold of the type that is obtained by a platinum-catalyzed cross-linking process, **characterized in that** it comprises a PTFE filler.

2. A flexible silicone elastomer-based mold as claimed in claim 1, wherein the amount of said PTFE filler is 0.2% to 2% by weight.

3. A flexible silicone elastomer-based mold as claimed in claim 1, wherein the amount of said PTFE filler is 0.3 % to 0.6% by weight.

4. A method of making a flexible silicone elastomer-based food grade mold, comprising the steps of:
- providing a liquid silicone mixture, which contains a platinum-based catalyst and has PTFE added thereto;
- molding said mixture;
- carrying out a cross-linking process at a temperature of 150°C to 190°C for 20 seconds to 120 seconds.

5. A use of silicone elastomers obtained by a platinum-catalyzed cross-linking process, with PTFE addition for making flexible food grade molds and containers.
